# EUROPEAN PATENT APPLICATION

(11) **EP 3 646 814 A1**
(43) Date of publication of application: **06.05.2020**
(21) Application number: 18825140.9
(22) Date of filing: 14.06.2018
(51) Int. Cl.: A61C 15/02

(54) **INTERDENTAL CLEANING TOOL**

(30) Priority: 28.06.2017 JP 2017125740
(71) Applicant: Kobayashi Pharmaceutical Co., Ltd., Chuo-ku Osaka-shi, Osaka 541-0045 (JP)
(72) Inventor: KIKKAWA, Tasuku, Ibaraki-shi Osaka 567-0057 (JP)
(74) Representative: Hoffmann Eitle
(86) International application number: PCT/JP2018/022777
(87) International publication number: WO 2019/003948

(57) **Abstract**

To provide an interdental cleaning tool which can improve the cleaning property on a side surface of a tooth and between teeth with suppressing a decrease in insertability of a cleaning portion between teeth. An interdental cleaning tool (2) includes a base portion (10) having a shaft portion (20) and a grip portion (30), and a cleaning portion (40). The cleaning portion (40) has a cleaning portion main body (42) and brush portions (44). Each of the brush portions (44) has a brush main body having a shape protruding outward from the cleaning portion main body in an axially intersecting direction, and a protrusion that has a shape protruding outward in a reference plane, which is a plane encompassing a center axis of the shaft portion (20) and a center axis of the brush main body, from an outer edge of the brush main body when the brush main body is cut along the reference plane, and is continuously connected along the outer edge of the brush main body.

## Description

### Technical Field

The present invention relates to an interdental cleaning tool.

### Background Art

Conventionally, an interdental cleaning tool for cleaning between teeth is known. For example, Patent Literature 1 discloses an interdental cleaning tool including a base portion having a shape extending in a specific direction and a cleaning portion made from an elastomer and capable of cleaning between teeth. The base portion has a shaft portion that is capable of being inserted between teeth and has a shape that extends linearly, and a grip portion having a shape that is capable of being gripped by fingers. The cleaning portion includes a cleaning portion main body that covers a part of an outer circumferential surface of the shaft portion, and a plurality of brush portions connected to the cleaning portion main body. Each of the brush portions has a shape that protrudes outward from an outer circumferential surface of the cleaning portion main body in a direction orthogonal to an axial direction of the shaft portion. Each of the brush portions is formed in a conical shape.

### Citation List

### Patent Literature

Patent Literature 1: PCT International Publication No. 2013/176297

### Summary of Invention

### Problems to be Solved by the Invention

With regard to the interdental cleaning tool as described in Patent Literature 1, there is a need to improve cleaning property (scraping performance) on a side surface of a tooth and between teeth. In view of the above, it is conceivable to enlarge a shape of each of the brush portions (thicken each of the brush portions). However, if the shape is enlarged, insertability of the cleaning portion between teeth is lowered.

An object of the present invention is to provide an interdental cleaning tool which can improve the cleaning property on a side surface of a tooth and between teeth while suppressing a decrease in the insertability of a cleaning portion between teeth.

### Means to Solve the Problem

As a result of intensive studies to solve the above problems, the present inventors focused on the fact that, when a brush portion is inserted between teeth, the brush portion cleans a side surface of a tooth and between teeth with a distal portion of the brush portion elastically deformed so as to be displaced from a distal side of a cleaning portion toward a grip portion with respect to a proximal end portion of the brush portion in a plane encompassing a center axis of a shaft portion and a center axis of the brush portion. On the other hand, when the brush portion is removed from between teeth, the brush portion cleans a side surface of a tooth and between teeth while showing a behavior opposite to that when inserted between teeth. Then, the present inventors arrived at the fact that the aforementioned problems can be solved by improving bending rigidity of the brush portion against an external force which acts on the brush portion when the cleaning portion is inserted and removed between teeth, instead of enlarging an outer shape of each of the brush portions entirely.

The present invention has been made from such a viewpoint. In detail, the present invention provides an interdental cleaning tool including a base portion having a shaft portion which extends in a specific direction to be capable of being inserted between teeth and has an insertion end portion formed at one end in the specific direction and a proximal end portion formed at the other end in the specific direction, and a grip portion which has a shape that extends from the proximal end portion so as to be apart from the shaft portion along the specific direction and is capable of being gripped by fingers; and a cleaning portion that is made from an elastomer having a hardness lower than a hardness of the base portion, the cleaning portion covering at least a part of the shaft portion and being capable of cleaning between teeth, wherein the cleaning portion includes: a cleaning portion main body that covers an outer circumferential surface of the shaft portion; and a plurality of brush portions connected to the cleaning portion main body, and each of the brush portions includes: a brush main body having a shape which protrudes outward from the cleaning portion main body in an axially intersecting direction that is a direction intersecting to the specific direction; and a protrusion that has a shape protruding outward from an outer edge of the brush main body within a reference plane which is a plane encompassing a center axis of the shaft portion and a center axis of the brush main body, the outer edge being on the reference plane when the brush main body is cut along the reference plane, the protrusion being shaped to be continuously connected along the outer edge of the brush main body.

When the cleaning portion of the interdental cleaning tool of the present invention is inserted and removed between teeth, an external force in a direction orthogonal to an axial direction of the brush main body acts on the brush portion in the reference plane. With regard to the interdental cleaning tool of the present invention, each of the brush portions has the protrusion protruding from the brush main body, and the protrusion has the shape that protrudes outward within the reference plane from the outer edge of the brush main body, the outer edge being on the reference plane when the brush main body is cut along the reference plane, the protrusion being shaped to be continuously connected along the outer edge of the brush main body. For this reason, bending rigidity of the brush portion against an external force acting on the brush portion when the cleaning portion is inserted and removed between teeth is improved. Therefore, as compared with a case where the entire brush portion is enlarged, a decrease in the insertability of the cleaning portion between teeth is suppressed, and the cleaning property on a side surface of a tooth and between teeth is improved.

In this case, a protrusion size of the protrusion from the brush main body in the reference plane is preferably 0.01 mm or more, more preferably 0.03 mm or more, even more preferably 0.1 mm or more, further preferably 0.15 mm or more, and particularly preferably 0.2 mm or more. Further, the protrusion size of the protrusion from the brush main body in the reference plane is preferably 0.8 mm or less, and more preferably 0.5 mm or less.

With regard to the interdental cleaning tool, preferably, a size of the grip portion in a second direction, which is a direction orthogonal to both the specific direction and a first direction that is a direction orthogonal to the specific direction, is larger than a size of the grip portion in the first direction, and the plurality of brush portions include a cross brush portion having a shape protruding from the cleaning portion main body in a direction which is parallel to the axially intersecting direction and intersects to the second direction.

In this manner, a side surface of a molar is capable of being effectively cleaned especially at the time of cleaning interdental space between molars. In detail, in a case where a size of the grip portion in the second direction is larger than a size of the grip portion in the first direction (when the grip portion is flat), at the time of cleaning interdental space between the molars, the cleaning portion often takes a posture to clean between teeth so that a longitudinal direction (second direction) of a cross section of the grip portion in a plane orthogonal to the axial direction of the shaft portion becomes substantially parallel to the vertical direction. In addition, in order to effectively clean side surfaces of the molars, the grip portion tends to be operated such that the cleaning portion is relatively strongly pressed against the side surface. With regard to the interdental cleaning tool of the present invention, the plurality of brush portions have the cross brush portion having a shape protruding in a direction intersecting the second direction, and the bending rigidity of the brush main body of the cross brush portion is improved by the protrusion. Accordingly, the side surfaces of the molars are effectively cleaned.

Further, with regard to the interdental cleaning tool, an outer diameter of the cleaning portion main body at a position, which is distant by 1.5 mm from a distal end of the cleaning portion toward the grip portion, is preferably 0.4 mm or more and 0.8 mm or less, more preferably 0.4 mm or more and 0.7 mm or less, further preferably 0.4 mm or more and 0.6 mm or less, and particularly preferably 0.4 mm or more and 0.56 mm or less. Further, with regard to the interdental cleaning tool, a diameter of the shaft portion at the position, which is distant by 1.5 mm from the distal end of the cleaning portion toward the grip portion is preferably 0.35 mm or more and 0.55 mm or less, more preferably 0.35 mm or more and 0.45 mm or less, and further preferably 0.35 mm or more and 0.41 mm or less.

Further, with regard to the interdental cleaning tool, the outer diameter of the cleaning portion main body at a position, which is distant by 10 mm from the distal end of the cleaning portion toward the grip portion, is preferably 0.4 mm or more, more preferably 0.5 mm or more, further preferably 0.6 mm or more, and particularly preferably 0.7 mm or more. On the other hand, the outer diameter of the cleaning portion main body at the position, which is distant by 10 mm from the distal end of the cleaning portion toward the grip portion, is preferably 1.2 mm or less, more preferably 1.1 mm or less, further preferably 0.9 mm or less, and particularly preferably 0.85 mm.

Further, the diameter of the shaft portion at the position, which is distant by 10 mm from the distal end of the cleaning portion toward the grip portion, is preferably 0.35 mm or more, more preferably 0.5 mm or more, and further preferably 0.6 mm or more. On the other hand, the diameter of the shaft portion at the position, which is distant by 10 mm from the distal end of the cleaning portion toward the grip portion, is preferably 0.8 mm or less, and more preferably 0.7 mm or less.

In this manner, the above effect can be obtained even in a case where the interdental cleaning tool is relatively thin.

Further, the present invention provides an interdental cleaning tool including a base portion having a shaft portion which extends in a specific direction to be capable of being inserted between teeth and has an insertion end portion formed at one end in the specific direction and a proximal end portion formed at the other end in the specific direction, and a grip portion which has a shape that extends from the proximal end portion so as to be apart from the shaft portion along the specific direction and is capable of being gripped by fingers; and a cleaning portion that is made from an elastomer having a hardness lower than a hardness of the base portion, the cleaning portion covering at least a part of the shaft portion and being capable of cleaning between teeth, wherein the cleaning portion includes: a cleaning portion main body that covers an outer circumferential surface of the shaft portion; and a plurality of brush portions having a shape protruding outward from an outer circumferential surface of the cleaning portion main body in an axially orthogonal direction which is a direction orthogonal to the specific direction, wherein a size of a cross-section of each of the brush portions on a plane orthogonal to the axially orthogonal direction is larger in a direction parallel to the specific direction than a size in a direction orthogonal to the specific direction of the cross section of each of the brush portions.

With regard to the interdental cleaning tool of the present invention, the size of the cross section of each of the brush portions is larger in the direction parallel to the specific direction than the size in the direction orthogonal to the specific direction in the cross section. Accordingly, the bending rigidity of the brush portion against an external force acting on the brush portion is improved. Therefore, as compared with a case where the entire brush portion is enlarged, a decrease in the insertability of the cleaning portion between teeth is suppressed, and the cleaning property on a side surface of a tooth and between teeth is improved.

### Effect of the Invention

As described above, according to the present invention, an interdental cleaning tool which can improve the cleaning property on a side surface of a tooth and between teeth with suppressing a decrease in the insertability of a cleaning portion between teeth can be provided.

### Brief Description of Drawings

FIG. 1 is a front view of an interdental cleaning tool group according to an embodiment of the present invention.
FIG. 2 is an enlarged view of a brush portion.
FIG. 3 is a cross-sectional view taken along line III-III in FIG. 2.
FIG. 4 is a diagram schematically showing how the interdental cleaning tool is inserted between molars (back teeth).

### Description of Embodiments

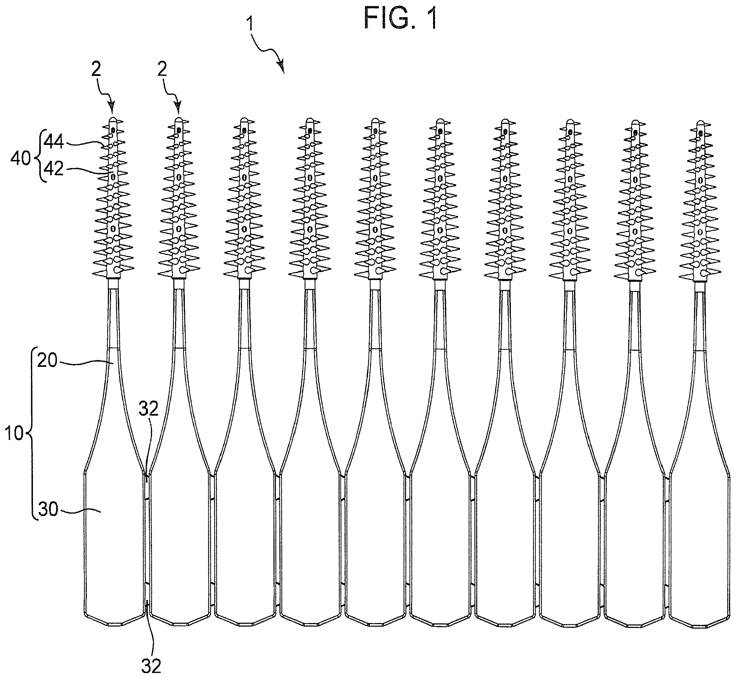

An interdental cleaning tool 2 according to an embodiment of the present invention is described with reference to FIGS. 1 to 4. FIG. 1 shows an interdental cleaning tool group 1 including a plurality (ten in the present embodiment) of the interdental cleaning tools 2 connected to each other. The interdental cleaning tools 2 adjacent to each other are connected by a connection portion 32. Each of the interdental cleaning tools 2 includes a base portion 10 made from synthetic resin and a cleaning portion 40 made from an elastomer having a hardness lower than that of synthetic resin.

The base portion 10 includes a shaft portion 20 and a grip portion 30. The base portion 10 is formed of synthetic resin, such as polypropylene, polyethylene, ABS, polybutylene terephthalate, polycarbonate, polyethylene terephthalate, polystyrene, polyacetal, polyamide, or the like. In the present embodiment, the base portion 10 is formed of polypropylene containing 30% by weight of glass fibers.

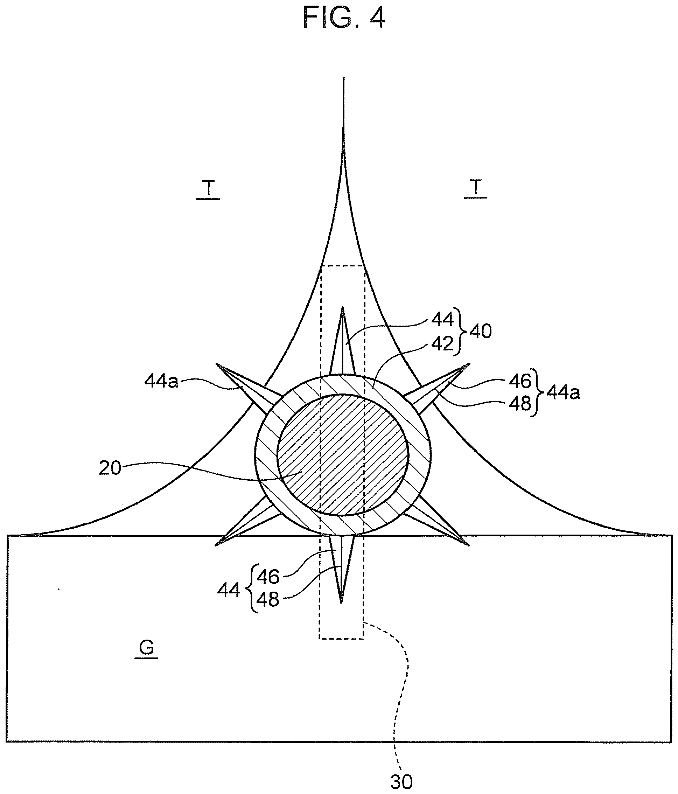

The shaft portion 20 has a shape that extends linearly along a specific direction (left-right direction in FIG. 1) and is capable of being inserted between teeth. An insertion end portion is formed at one end (left end in FIG. 1) of the shaft portion 20, and a proximal end portion is formed at the other end of the shaft portion 20. The shaft portion 20 has a shape in which its outer shape gradually becomes smaller from the proximal end portion toward the insertion end portion. As shown in FIG. 4, a cross section of the shaft portion 20 in a plane orthogonal to the axial direction of the shaft portion 20 (hereinafter referred to as "axially orthogonal cross section") is circular.

The grip portion 30 extends along the axial direction of the shaft portion 20 so as to be apart from the proximal end portion of the shaft portion 20, and has a shape that is capable of being gripped by fingers. The grip portion 30 is formed to be flat. In detail, a size of the grip portion 30 in a second direction (vertical direction in FIG. 1), which is a direction orthogonal to both the specific direction and a first direction that is a direction orthogonal to the specific direction, is larger than a size of the grip portion 30 in the first direction.

The cleaning portion 40 is a portion for cleaning between teeth, and is formed of an elastomer having a hardness lower than the hardness of the base portion 10. In the present embodiment, a styrene elastomer is used as the elastomer. However, silicon, an olefin elastomer, a polyester elastomer, or the like may be used as the elastomer. In the present embodiment, the cleaning portion 40 includes a cleaning portion main body 42 and a plurality of brush portions 44. Further, as the hardness of the elastomer, durometer hardness type A (JISK6253) is preferably 10 to 50, more preferably 10 to 40. In the present embodiment, the durometer hardness type A is 35.

The cleaning portion main body 42 has a shape that covers at least a part of an outer circumferential surface of the shaft portion 20 (a portion including the insertion end portion). A length of the cleaning portion main body 42 in the axial direction of the shaft portion 20 is set to 15.5 mm. An outer diameter of the cleaning portion main body 42 at a position which is distant by 1.5 mm from a distal end of the cleaning portion 40 toward the grip portion 30, is 0.55 mm, and a diameter of the shaft portion 20 at the position, which is distant by 1.5 mm from the distal end of the cleaning portion 40 toward the grip portion 30, is 0.4 mm. Further, the outer diameter of the cleaning portion main body 42 at a position, which is distant by 10 mm from the distal end of the cleaning portion 40 toward the grip portion 30, is 0.85 mm, and the diameter of the shaft portion 20 at the position, which is distant by 10 mm from the distal end of the cleaning portion 40 toward the grip portion 30, is 0.67 mm.

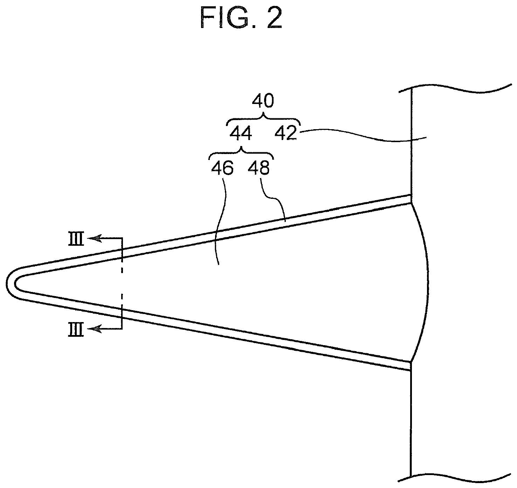

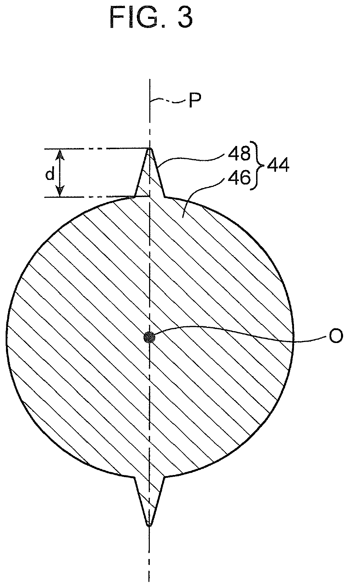

Each of the brush portions 44 is provided on an outer circumferential surface of the cleaning portion main body 42. As shown in FIGS. 2 and 3, each of the brush portions 44 has a brush main body 46 and a protrusion 48. In FIG. 1, the protrusion 48 is not shown.

The brush main body 46 has a shape that protrudes outward from the outer circumferential surface of the cleaning portion main body 42 in an axially intersecting direction that is a direction intersecting to the axial direction of the shaft portion 20. Preferably, the brush main body 46 has a shape that protrudes outward from the outer circumferential surface of the cleaning portion main body 42 in an axially orthogonal direction which is orthogonal to the axial direction of the shaft portion 20, so that the outer shape gradually becomes smaller as the distance from the cleaning portion main body 42 increases. In the present embodiment, each of the brush main bodies 46 is formed in a conical shape.

The protrusion 48 has a shape that protrudes outward from an outer edge of the brush main body 46 within a reference plane P (c.f. FIG. 3), which is a plane encompassing a center axis of the shaft portion 20 and a center axis O (c.f. FIG. 3) of the brush main body 46, the outer edge of the brush main body being on the reference plane P when the brush main body 46 is cut along the reference plane P. The protrusion 48 is shaped to be continuously connected along the outer edge of he brush main body 46. A protrusion size d of the protrusion 48 from the brush main body 46 in the reference plane P is 0.1 mm. A lower limit value of a ratio of the protrusion size d of the protrusion 48 to a diameter of the proximal end portion of the brush main body 46 in the cross section of the brush portion 44 in a plane orthogonal to the center axis O of the brush main body 46 is normally set to 1%, preferably set to 4.3%, more preferably set to 20%, further preferably set to 37.5%, and particularly preferably set to 50%, from the viewpoint of suppressing a decrease in the insertability between teeth and improving the cleaning property on a side surface of a tooth and between teeth. Further, an upper limit value of the ratio is normally set to 200%, preferably set to 125%, and more preferably set to 100%, from the viewpoint of suppressing a decrease in the insertability between teeth and improving the cleaning property on a side surface of a tooth and between teeth.

Further, a diameter of a cross section of the brush portion at the proximal end portion of the brush main body 46 is 0.54 mm, the cross section of the brush portion being orthogonal to the center axis O of the brush main body 46. A lower limit value of the diameter is preferably set to 0.1 mm, and more preferably set to 0.15 mm, from the viewpoint of suppressing a decrease in the insertability between teeth and improving the cleaning property on a side surface of a tooth and between teeth. An upper limit value of the diameter is preferably set to 1 mm, more preferably set to 0.7 mm, further preferably set to 0.5 mm, and particularly preferably set to 0.4 mm, from the viewpoint of suppressing a decrease in the insertability between teeth and improving the cleaning property on a side surface of a tooth and between teeth.

A length from the proximal end portion to a distal end portion of the brush main body 46 when the brush main body 46 is cut along a plane encompassing the center axis O of the brush main body 46 is 0.5 mm. A lower limit value of the length is preferably set to 0.1 mm, and more preferably set to 0.3 mm, from the viewpoint of suppressing a decrease in the insertability between teeth and improving the cleaning property on a side surface of a tooth and between teeth. An upper limit value of the length is preferably set to 2.5 mm, more preferably set to 2 mm, further preferably set to 1.8 mm, and particularly preferably set to 1.7 mm, from the viewpoint of suppressing a decrease in the insertability between teeth and improving the cleaning property on a side surface of a tooth and between teeth. Further, the length of the brush main body 46 is preferably gradually shortened from the grip portion side to the distal end side of the cleaning portion main body 42.

As shown in FIG. 4, the plurality of brush portions 44 include a cross brush portion 44a having a shape protruding from the cleaning portion main body 42 in a direction which is parallel to the axially intersecting direction (in the present embodiment, parallel to the axially orthogonal direction) and intersects to the second direction (vertical direction in FIG. 4).

Next, with reference to FIG. 4, a case where the interdental cleaning tool 2 described above is used to clean between, for example, molars (back teeth) T is described. When interdental space between the molars T is cleaned with the interdental cleaning tool 2 including the grip portion 30 formed to be flat and the shaft portion 20 having a linearly extending shape as in the present embodiment, a user of the interdental cleaning tool 2 often inserts the cleaning portion 40 into an oral cavity toward the interdental space between the molars T in a state in which the grip portion 30 is gripped in an orientation in which a longitudinal direction (vertical direction in FIG. 4) of the axially orthogonal cross section of the grip portion 30 becomes substantially vertical. Then, the user operates the grip portion 30 so that the cleaning portion 40 moves between the teeth. At this time, a side surface of the molar T exists at a position apart from the cleaning portion main body 42 in a direction intersecting the longitudinal direction (second direction) of the axially orthogonal cross section of the grip portion 30. However, since the plurality of brush portions 44 of the interdental cleaning tool 2 of the present invention have the cross brush portion 44a having a shape protruding from the cleaning portion main body 42 in a direction intersecting to the second direction, the side surface of the molar T is effectively cleaned.

Further, when the cleaning portion 40 is inserted and removed along the interdental space, an external force in a direction orthogonal to the axial direction of the brush main body 46 in the reference plane P acts on each of the brush portions 44 (particularly the cross brush portion 44a). Here, in the interdental cleaning tool 2 of the present embodiment, each of the brush portions 44 has the protrusion 48 protruding from the brush main body 46, and the protrusion 48 has the shape that protrudes outward from the outer edge of the brush main body in the reference plane P 46 when the brush main body 46 is cut along the reference plane P, and is continuously connected along the outer edge of brush main body 46. For this reason, the bending rigidity of the brush portion 44 against the external force acting on the brush portion 44 when the cleaning portion 40 is inserted and removed along interdental space is improved. Therefore, as compared with a case where the entire brush portion 44 is enlarged, a decrease in the insertability of the cleaning portion 40 between teeth is suppressed, and the cleaning property on a side surface of a tooth and between teeth is improved.

The embodiment disclosed this time should be considered to be illustrative and not to be restrictive in all aspects. The scope of the present invention is shown not by the above description of the embodiment, but by the scope of claims, and further includes all modifications within the meaning and scope equivalent to the scope of claims.

The shape of the brush portion 44 is not limited to the above example. For example, the size of the cross section of each of the brush portions on a plane orthogonal to the axially orthogonal direction may be larger in the direction parallel to the specific direction than the size in the direction orthogonal to the specific direction in the cross section of each of the brush portions 44. Even in this case, the bending rigidity of the brush portion 44 against the external force acting on the brush portion 44 when the cleaning portion 40 is inserted and removed along interdental space is improved. Therefore, a similar effect to that of the above embodiment can be obtained.

Further, the protrusion size d of the protrusion 48 in the reference plane P does not have to be the same along the outer edge of the brush main body 46, and the outer edge of the protrusion 48 in the reference plane P may have, for example, a wavy shape.

### Reference Signs

- 1: interdental cleaning tool group
- 2: interdental cleaning tool
- 10: base portion
- 20: shaft portion
- 30: grip portion
- 40: cleaning portion
- 42: cleaning portion main body
- 44: brush portion
- 44a: cross brush portion
- 46: brush main body
- 48: protrusion

## Claims

1. An interdental cleaning tool comprising:
a base portion having a shaft portion which extends in a specific direction to be capable of being inserted between teeth and has an insertion end portion formed at one end in the specific direction and a proximal end portion formed at the other end in the specific direction, and a grip portion which has a shape that extends from the proximal end portion so as to be apart from the shaft portion along the specific direction and is capable of being gripped by fingers; and
a cleaning portion that is made from an elastomer having a hardness lower than a hardness of the base portion, the cleaning portion covering at least a part of the shaft portion and being capable of cleaning between teeth, wherein
the cleaning portion includes:
a cleaning portion main body that covers an outer circumferential surface of the shaft portion; and
a plurality of brush portions connected to the cleaning portion main body, and
each of the brush portions includes:
a brush main body having a shape which protrudes outward from the cleaning portion main body in an axially intersecting direction that is a direction intersecting to the specific direction; and
a protrusion that has a shape protruding outward from an outer edge of the brush main body within a reference plane which is a plane encompassing a center axis of the shaft portion and a center axis of the brush main body, the outer edge being on the reference plane when the brush main body is cut along the reference plane, the protrusion being shaped to be continuously connected along the outer edge of the brush main body.

2. The interdental cleaning tool according to claim 1, wherein
a protrusion size of the protrusion from the brush main body in the reference plane is 0.01 mm or more and 0.8 mm or less.

3. The interdental cleaning tool according to claim 1 or 2, wherein
a size of the grip portion in a second direction, which is a direction orthogonal to both the specific direction and a first direction that is a direction orthogonal to the specific direction, is larger than a size of the grip portion in the first direction, and
the plurality of brush portions include a cross brush portion having a shape protruding from the cleaning portion main body in a direction which is parallel to the axially intersecting direction and intersects to the second direction.

4. The interdental cleaning tool according to any of claims 1 to 3, wherein
an outer diameter of the cleaning portion main body at a position, which is distant by 1.5 mm from a distal end of the cleaning portion toward the grip portion, is 0.4 mm or more and 0.8 mm or less, and a diameter of the shaft portion at the position, which is distant by 1.5 mm from the distal end of the cleaning portion toward the grip portion, is 0.35 mm or more and 0.55 mm or less, and
the outer diameter of the cleaning portion main body at a position, which is distant by 10 mm from the distal end of the cleaning portion toward the grip portion, is 0.4 mm or more and 1.2 mm or less, and the diameter of the shaft portion at the position, which is distant by 10 mm from the distal end of the cleaning portion toward the grip portion, is 0.35 mm or more and 0.8 mm or less.

5. An interdental cleaning tool comprising:
a base portion having a shaft portion which extends in a specific direction to be capable of being inserted between teeth and has an insertion end portion formed at one end in the specific direction and a proximal end portion formed at the other end in the specific direction, and a grip portion which has a shape that extends from the proximal end portion so as to be apart from the shaft portion along the specific direction and is capable of being gripped by fingers; and
a cleaning portion that is made from an elastomer having a hardness lower than a hardness of the base portion, the cleaning portion covering at least a part of the shaft portion and being capable of cleaning between teeth, wherein
the cleaning portion includes:
a cleaning portion main body that covers an outer circumferential surface of the shaft portion; and
a plurality of brush portions having a shape protruding outward from an outer circumferential surface of the cleaning portion main body in an axially orthogonal direction which is a direction orthogonal to the specific direction, wherein
a size of a cross-section of each of the brush portions on a plane orthogonal to the axially orthogonal direction is larger in a direction parallel to the specific direction than a size in a direction orthogonal to the specific direction of the cross section of each of the brush portions.
